# EUROPÄISCHE PATENTANMELDUNG

(11) **EP 1 136 191 A2**
(43) Veröffentlichungstag der Anmeldung: **26.09.2001**
(21) Anmeldenummer: 01810253.3
(22) Anmeldetag: 13.03.2001
(51) Int. Cl.: B25F 5/00, B25D 17/00

(54) **Verfahren und Einrichtung für handgeführte Werkzeugmaschinen zur optimierten Bearbeitung verschiedener Untergründe durch Energieanpassung**

(30) Priorität: 23.03.2000 DE 10014314
(71) Anmelder: HILTI Aktiengesellschaft, 9494 Schaan (LI)
(72) Erfinder: Miescher, Stefan, 9492 Eschen (LI); Fritz, Mark, 6841 Mäder (AT); Favre-Bulle, Bernard, 6806 Feldkirch-Tosters (AT); Hofbrucker, Thomas, 82291 Mammendorf (DE); Dohm, Steffen, 9000 St. Gallen (CH)
(74) Vertreter: Wildi, Roland

(57) **Zusammenfassung**

Das Verfahren und eine darauf basierende Einrichtung für handgeführte Werkzeugmaschinen, insbesondere für Bohrhämmer, zur optimalen Bearbeitung verschiedener Untergründe durch Energieanpassung sieht vor, daß die Werkzeugmaschine beim Einschalten - vorzugsweise vorwählbar - zunächst in einem ersten Betriebszustand (I) mit verminderter Leistungsaufnahme bei reduzierter Nennspannung (z. B. 170 V) betrieben wird. Nach Ablauf einer vorgegebenen Zeitdauer von beispielsweise 5 Sekunden wird automatisch in einen zweiten Betriebszustand (II) mit erhöhter Leistungsaufnahme bei voller Nennspannung von beispielsweise 230 V umgeschaltet. Im ersten Betriebszustand mit verminderter Leistungaufnahme ist die Einzelschlagenergie reduziert und/oder die Schlagfrequenz bzw. die Drehzahl herabgesetzt. Dadurch ist insbesondere bei der Bearbeitung von Hohlblockmaterialien eine schädigungsfreie Bearbeitung und bei Vollmaterial ein präzises Anbohren gewährleistet. Im zweiten Betriebszustand mit erhöhter Leistungaufnahme ist die Einzelschlagenergie bzw. sind die Frequenz und Drehzahl auf einen erhöhten und erwünschten Wert eingestellt, der ein raschen Setzen eines Bohrlochs gewährleistet.

## Beschreibung

Die Erfindung betrifft ein Verfahren nach dem Oberbegriff des Patentanspruchs 1 bzw. eine darauf basierende Einrichtung nach dem Oberbegriff des Patentanspruchs 9 für handgeführte Werkzeugmaschinen, insbesondere für Bohrhämmer, zur Optimierung der Bearbeitung verschiedener Untergründe.

Werkzeugmaschinen der genannten Art, also insbesondere Bohrhämmer, werden zur Bearbeitung unterschiedlichster Untergründe eingesetzt. In einfacher Ausführungsform werden diese Geräte mit konstanter vorgebbarer Leistungsaufnahme und nach dem Einschalten in der Regel in einer einzigen Betriebsart betrieben. Zusätzlich können solche Geräte mit einem in der Regel im Handgriff integrierten Stellelement, z. B. einem Potentiometer, ausgerüstet sein, so daß der Benutzer das Gerät für die Bearbeitung verschiedener Untergründe durch Änderung der Drehzahl und/oder der Schlagfrequenz bzw. der Einzelschlagenergie anpassen kann.

Vor der Bearbeitung jedoch ist von außen häufig nicht ersichtlich, um welches Material es sich bei dem zu bearbeitenden Untergrund handelt. Bei zu hoher Drehzahl oder zu hoher Einzelschlagenergie besteht insbesondere bei bestimmten Materialien wie sogenannten Hohlblocksteinen das Problem, daß es zu einem zu hohen Energieeintrag kommt mit der Folge von unerwünschten Schädigungen am Untergrund, beispielsweise durch Ausplatzen von Zwischenstegen, so daß Halteelemente wie Dübel nicht mehr ausreichend fest verankert werden können.
Dies gilt vor allem für Bohrhämmer, die mit dem erwähnten Stellglied ausgerüstet sind beispielsweise dann, wenn der Benutzer beim Einschalten des Geräts irrtümlich eine zu hohe Motordrehzahl einstellt.

Die Druckschrift EP 0 734 116 A2 beschreibt ein Verfahren und eine Schaltungsanordnung zum Betreiben eines Elektromotors in einem Elektrohandwerkzeug. Der Motor ist in einer ersten Betriebsphase mit einer ersten, variabel voreinstellbaren Drehzahl bis zum Erreichen eines voreingestellten Grenzdrehmoments betreibbar. In einer nachfolgenden Betriebsphase ist vorgesehen, den Motor durch Drehmomentpausen auf einem periodisch unterbrochenen Nachdrehmoment zu betreiben. Dadurch wird ein besseres Arbeitsergebnis insbesondere beim Eindrehen von Schrauben erzielt.

Der Erfindung liegt die Aufgabe zugrunde, eine Werkzeugmaschine der eingangs genannten Art so zu verbessern, daß auch bei unterschiedlichen zunächst unbekannten abzubauenden Materialien stets ein optimaler Haltewert im Untergrund erzielt wird, ohne daß die Gefahr einer falschen Handhabung des Geräts mit der Folge einer unvermeidlichen Verschlechterung der Haltewerte besteht.

Die Erfindung ist bei einem Verfahren zur automatischen Voreinstellung einer handgeführten Werkzeugmaschine, insbesondere eines Bohrhammers, die in verschiedenen Betriebszuständen betreibbar ist, erfindungsgemäß dadurch gekennzeichnet, daß die Maschine beim Einschalten zunächst in einen ersten Betriebszustand mit verminderter Leistungsaufnahme und nach Ablauf einer kurzen vorbestimmten Zeitdauer in einen zweiten Betriebszustand mit erhöhter Leistungsaufnahme geschaltet wird.

Vorteilhafte Weiterbildungen dieses Erfindungsgedankens sind in abhängigen Patentansprüchen gekennzeichnet.

Das erfindungsgemäße Verfahren läßt sich insbesondere bei einem handgeführten Bohrhammer anwenden, mit dem beispielsweise Befestigungsbohrungen unter anderem in einem Hohlblock- als auch in einem Vollmaterial gesetzt werden sollen. Beim Einschalten der Maschine wird die zugeführte Netzspannung von z. B. 230 V Nennwert beispielsweise mittels eines durch eine Zeitschaltlogik getriggerten Thyristorelements auf einen deutlich niedrigeren Wert von z. B. 140 bis 200 V, insbesondere auf 170 V reduziert. Der Bohrhammer wird also in diesem ersten Betriebszustand mit geringer Einzelschlagenergie und/oder niedrigerer Schlagfrequenz und/oder kleinerer Drehzahl betrieben. Dadurch lassen sich insbesondere bei Hohlblockmaterialien Ausplatzungen an Zwischenstegen vermeiden, so daß insgesamt ein wesentlich besserer Haltewert für Dübel oder sonstige Befestigungselemente erzielt wird.

Erfindungsgemäß wird der Bohrhammer zunächst für eine bestimmte Zeitdauer von beispielsweise 5 Sekunden im ersten Betriebszustand betrieben, wobei bei der Bearbeitung beispielsweise von Hohlblockziegeln während dieser ersten Betriebsphase eine Setztiefe von einigen 10 mm beispielsweise von 80 mm erreicht wird, so daß eine ausreichende Führung des Bohrers gewährleistet ist. Bei einer vorteilhaften Ausführungsvariante kann die erste Zeitdauer für den ersten Betriebszustand variabel einstellbar sein. Für die meisten Anwendungsfälle ist jedoch eine fest vorgegebene Zeitdauer wünschenswert, so daß eine Voreinstellung auf beispielsweise 2 bis 20 Sekunden insbesondere auf 5 Sekunden vorzusehen ist. Das anschließende automatische Hochschalten auf starke Einzelschlagenergie stellt dann ein erwünschtes rasches Setzen eines für Halteelemente bestimmten Lochs sicher. Die jetzt zuverlässige Führung des Bohrers verhindert unerwünschte Ausplatzungen an Zwischenstegen des Hohlblockmaterials.

Vorteilhaft ist es den Bohrhammer nach jedem Einschalten zunächst und zwangsläufig in den ersten Betriebszustand zu schalten. Dadurch wird vermieden, daß der Benutzer den Bohrhammer irrtümlich und sofort mit der vollen Leistungsaufnahme betreibt. Eine gegebenenfalls unbeabsichtigte Verstellung des Betriebsverhaltens des Bohrhammers ist sicher verhindert.

Nach Ablauf der vorgegebenen Zeitdauer wird die Reduzierung der Nennspannung aufgehoben; die Maschine schaltet automatisch bis zum Abschalten auf Nennspannung, beispielsweise auf eine Netzspannung von 230 V um. Bei erhöhter Leistungsaufnahme in dem zweiten Betriebszustand wird das Gerät dann mit vorgegebener größerer Drehzahl und/oder höherer Schlagfrequenz bzw. höherer Einzelschlagenergie betrieben.

Mit dem erfindungsgemäßen Verfahren werden auch Vorteile bei der Bearbeitung von Vollmaterial erzielt, weil während des ersten Betriebszustands ein präzises Anbohren des Materials gewährleistet ist und ein unbeabsichtigtes Abgleiten des Bohrers von der zu bohrenden Stelle verhindert wird.

Eine handgeführte Werkzeugmaschine, insbesondere ein Bohrhammer, ist erfindungsgemäß gekennzeichnet durch eine Einrichtung zur automatischen Einstellung eines ersten Betriebszustands mit verminderter Leistungsaufnahme beim Einschalten der Maschine und zur zeitabhängigen Umschaltung in einen zweiten Betriebszustand mit erhöhter Leistungsaufnahme. Die Umschaltung vom ersten in den zweiten Betriebszustand erfolgt zwangsläufig und ohne direkte Beeinflussung durch den Gerätebenutzer.

Besonders vorteilhaft ist es, die für die zeitabhängige Umschaltung vorgesehene Zeitgeberschaltung mit Leistungsumschaltelement, beispielsweise Thyristor, als integrierte Schaltung oder als Hybrid-Schaltung unmittelbar in den Handgriff oder einen Drücker-Schalter im Handgriff der Maschine zu integrieren.

Weitere vorteilhafte Ausgestaltungen und Weiterbildungen des Erfindungsgedankens sind in der nachfolgenden Beschreibung näher erläutert oder in abhängigen Patentansprüchen definiert.

Die Erfindung und vorteilhafte Einzelheiten werden nachfolgend unter Bezug auf die Zeichnungen in einer beispielsweisen Ausführungsform näher erläutert. Es zeigen:
- **Fig. 1**: ein Blockschaltbild zur Erläuterung des erfindungsgemäßen Verfahrens;
- **Fig. 2**: ein Zeitdiagramm zur Veranschaulichung verschiedener Betriebszustände;
- **Fig. 3**: eine schematisierte Schnittdarstellung eines handelsüblichen Bohrhammers, der mit einer erfindungsgemäßen Umschalteinrichtung ausgerüstet ist;
- **Fig. 4**: eine schematische Perspektivdarstellung eines durch Fingerdruck zu betätigenden, im Handgriff einer Werkzeugmaschine schwenkbar angelenkten Handschalters mit einem zugeordneten Wählhebel für unterschiedliche Eindrücktiefen zur wahlweisen Betriebsvorwahl; und
- **Fig. 5 mit Teilfiguren 5a, 5b und 5c**: eine schematische Draufsichtdarstellung auf den Handschalter mit zugeordnetem Wählhebel nach Fig. 4 zur Veranschaulichung von dessen Funktionsweise.

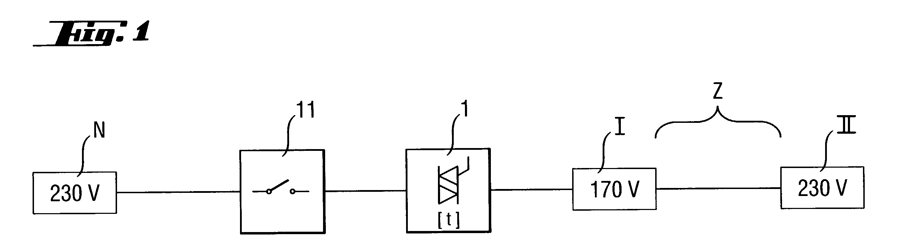

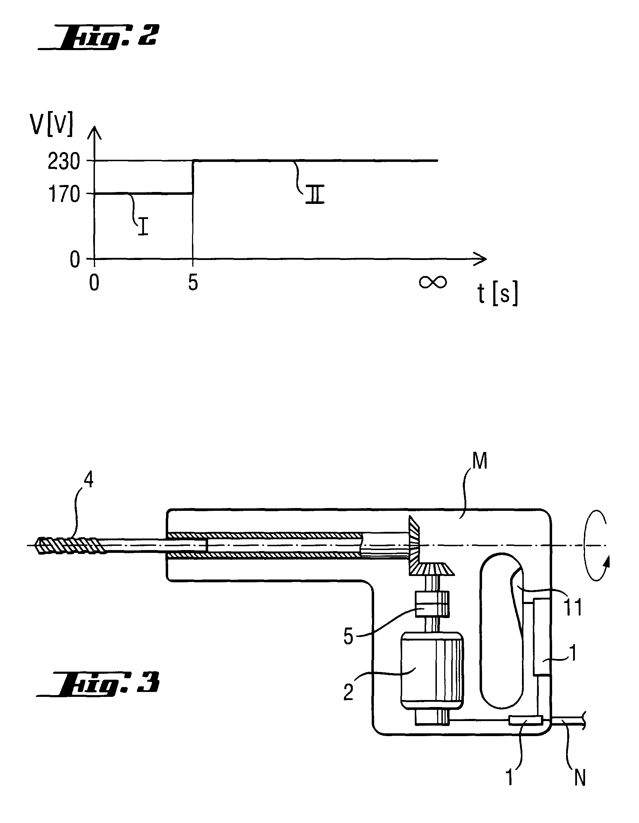

Das schematische Funktionsschaltbild der Fig. 1 erläutert den prinzipiellen Ablauf des erfindungsgemäßen Verfahrens. Eine Nennspannung, beispielsweise eine Netzspannung von 230 V, wird der Maschine über ein Netzkabel N (Fig. 3) zugeführt. Im Handgriff der Maschine mit EIN/AUS-Handschalter 11 ist eine erfindungsgemäße Einrichtung 1 zur anfänglichen und kurzzeitigen Reduzierung der Nennspannung von 230 V auf beispielsweise 170 V enthalten.

Wie aus der Fig. 1 ersichtlich, wird der Motor 2 (Fig. 3) des Bohrhammers M nach dem Einschalten durch Betätigen des EIN/AUS-Handschalters 11 zunächst mit der reduzierten Spannung von beispielsweise 170 V versorgt, wodurch ein erster Betriebszustand I (Fig. 2) mit verminderter Leistungsaufnahme vorgegeben und eingestellt wird. Die Reduzierung der Versorgungsspannung erfolgt vorteilhafterweise durch einen über einen elektronischen Zeitgeber angesteuerten steuerbaren Leistungshalbleiterschalter, insbesondere einen Thyristor. Bei der reduzierten Spannung von 170 V im ersten Betriebszustand wird der Bohrhammer M also insbesondere mit geringer Einzelschlagenergie bei kleinerer Drehzahl und niedrigerer Schlagfrequenz betrieben.

Nach Ablauf einer vorbestimmten Zeitdauer von einigen Sekunden, beispielsweise von 2 bis 20 Sekunden, vorzugsweise von 5 Sekunden, veranlaßt die Einrichtung 1 zur Zeitvorgabe und Umschaltung ein Hochschalten auf die normale Nennspannung von beispielsweise 230 V. Die beim Einschalten zunächst eingestellte Reduzierung der Nennspannung auf 170 V wird aufgehoben, und die Maschine M wird auf den zweiten Betriebszustand II (Fig. 2) mit erhöhter Leistungsaufnahme umgeschaltet. Der Bohrhammer M läuft jetzt mit starker Einzelschlagenergie, größerer Drehzahl und/oder erhöhter Schlagfrequenz.

In Fig. 2 sind die vorstehend erläuterten Vorgänge in einem Zeitdiagramm veranschaulicht. Die Versorgungsspannung V ist im ersten Betriebszustand I, nämlich beim Betätigen des Handschalters 11 zunächst auf einen reduzierten Nennwert von z. B. 170 V geschaltet. Nach Ablauf einer vorgebbaren Zeitdauer Z von beispielsweise 5 Sekunden wird diese reduzierte Versorgungsspannung aufgehoben und es erfolgt eine Umschaltung in den zweiten Betriebszustand II, also in der Regel eine Umschaltung auf eine Netzspannung von 230 V. In Fig. 2 ist eine Spannungsumschaltung nach Ablauf der Zeitdauer von 5 Sekunden für den ersten Betriebszustand I in Form einer Sprungfunktion vorgesehen. Der Bohrhammer M wird also bei Überschreiten der Zeit von 5 Sekunden unmittelbar auf die Nennspannung, insbesondere die Netzspannung von 230 V, umgeschaltet. Ebenso kann eine kontinuierliche Umschaltung mit stufenlosem Übergang vom ersten in den zweiten Betriebszustand vorgesehen werden, wobei die Übergangszeit vorteilhafterweise auf einige Sekunden, beispielsweise 2 bis 4 Sekunden, voreingestellt wird. Wie sich aus dem horizontalen Kurvenverlauf in Fig. 2 ersehen läßt, ist die Höhe der angelegten Versorgungsspannung während des ersten Betriebszustands I bzw. während des zweiten Betriebszustands II jeweils konstant. Ferner ist aus dem Kurvenverlauf der Fig. 2 ersichtlich, daß der Bohrhammer M für den Fall, daß der Handschalter 11 fortgesetzt betätigt wird, "unendlich lange" im zweiten Betriebszustand II verbleibt. Erst bei Freigabe des Handschalters 11 wird die Maschine M abgeschaltet. Bei jedem erneuten Betätigen des Handschalters 11 wird wiederum zunächst die reduzierte Versorgungsspannung von 170 V zugeführt. Für den Gerätebenutzer ist es also ohne sonstige, eventuelle Umschaltung nicht möglich, durch Betätigung des Handschalters 11 sofort und unmittelbar den zweiten Betriebszustand II einzuschalten.

Bei dem in Fig. 3 nur schematisch dargestellten Bohrhammer M ist ein den Bohrer 4 translatorisch antreibendes Schlagwerk vorhanden (nicht gezeigt), das vom Motor über eine im Zusammenhang mit der Erfindung nicht interessierte Sicherheitskupplung 5 angetrieben wird. Wie dargestellt, kann die erfindungsgemäße Umschalteinrichtung 1 direkt in den Handgriff eingepaßt oder integriert sein.

Mit der Erfindung läßt sich ein handelsüblicher Bohrhammer - auch nachrüstbar - so modifizieren, daß auf jeden Fall eine angepaßte Bearbeitung verschiedener Untergrundmaterialien gewährleistet ist. Während des nach dem Einschalten automatisch eingestellten ersten Betriebszustands I mit verminderter Leistungsaufnahme wird einerseits bei weniger stabilen Hohlblockmaterialien ein ausreichend tiefes Setzloch erzielt, das eine gute Führung des Bohrers 4 gewährleistet. Eine Schädigung des Materials, insbesondere das Ausplatzen von Zwischenstegen, wird vermieden. Andererseits wird bei einem massiven Vollmaterial ein zu setzendes Loch zunächst vorgebohrt, so daß ein Weggleiten des Bohrers 4 sicher verhindert wird. Ein rasches Setzen des erwünschten Befestigungslochs ist gleichwohl gewährleistet durch die nach beispielsweise 5 Sekunden erfolgende Umschaltung auf den Betriebszustand II.

Gemäß einer vorteilhaften Ergänzung zum Erfindungsgedanken kann an der Werkzeugmaschine eine Wähleinrichtung vorhanden sein, mit der sich eine Vorwahl für die automatische Einstellung des ersten und anschließend des zweiten Betriebszustands wählen läßt. In der einen Stellung der Wähleinrichtung ist das zweistufige Hochlaufen der Maschine gemäß der Erfindung eingestellt, während in der anderen Stellung der Wähleinrichtung sofort die vom Gerätebenutzer gewünschten Betriebsparameter zur Verfüugung stehen, also der zweite Betriebszustand mit erhöhter Leistungsaufnahme.

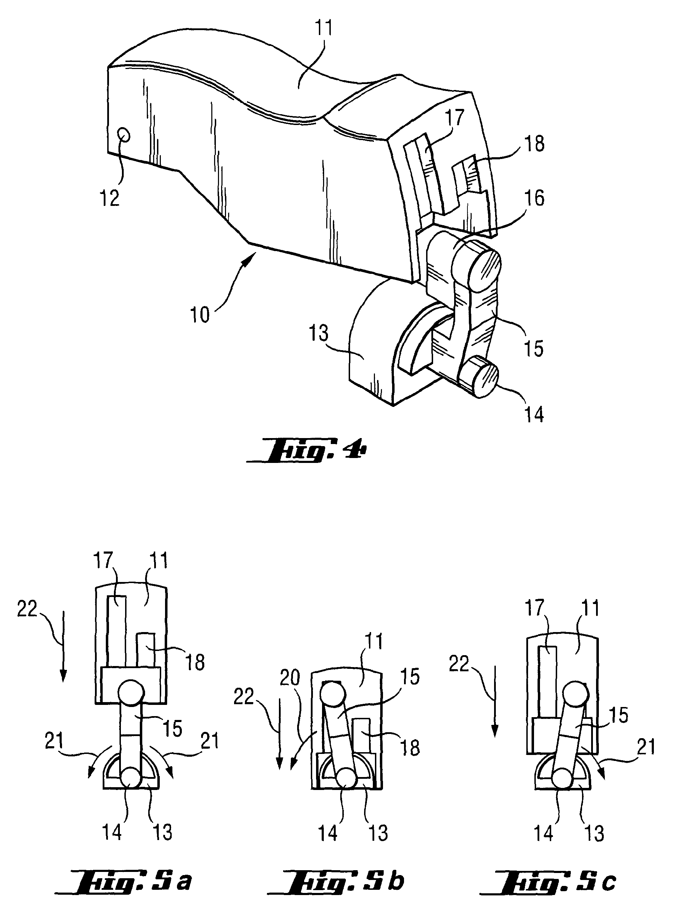

Die Fig. 4 und 5 veranschaulichen eine mögliche Ausführungsform für eine derartige Wähleinrichtung, die im dargestellten Beispiel eine rein mechanische Lösung beinhaltet. Selbstverständlich sind auch entsprechende rein elektrische oder elektromechanische Wähleinrichtungen möglich, die für den Fachmann keiner besonderen Erläuterung bedürfen.

Die Fig. 4 zeigt in Perspektivdarstellung die allgemein mit Bezugshinweis 10 gekennzeichnete Wähleinrichtung, die aus einem Zusammenwirken des an einer Schwenkachse 12 im handgriffseitigen Gehäuseteil der Maschine M angelenkten EIN/AUS-Handschalters 11 und eines ebenfalls im handgriffseitigen Gehäuseteil der Maschine M in einem Lagerblock 13 gelagerten Schwenkhebels 15 besteht, der um einen Drehzapfen 14 schwenkbar ist. Auf der dem Betrachter zugekehrten Oberseite des bei 12 angelenkten, federvorbelasteten Handschalters 11 sind zwei unterschiedlich tiefe Rastnuten 17 bzw. 18 ausgebildet, auf die ein am Schwenkhebel 15 vorhandener Gleitschuh 16 je nach gewählter Verschwenkposition des Schwenkhebels 15 ausgerichtet ist. Wie die Einzelpositionsdarstellungen der Fig. 5a bis 5c erkennen lassen, ist der Schwenkhebel 15 bzw. dessen zugeordneter Gleitschuh 16 innerhalb einer Aussparung 19 im Handschalter 11 zwischen zwei Anschlagpositionen in einer ersten Schwenkrichtung 20 bzw. einer zweiten Schwenkrichtung 21 verschwenkbar. Dies ist jedoch nur möglich, solange der federvorbelastete Handschalter 11 vom Gerätebenutzer nicht gedrückt, also ausgerastet ist. Diese Handschalterstellung ist in Fig. 4 bzw. in Fig. 5a veranschaulicht. Der Schwenkhebel 15 kann jetzt zwischen den zwei unterschiedlich tiefen Rastnuten 17 bzw. 18 verschwenkt werden. Ist der Schwenkhebel 15 in die in Fig. 5a durch den Hinweispfeil 20 veranschaulichte Position geschwenkt, so läßt sich der Handschalter 11 in Richtung des Pfeils 22 weiter eindrücken (vergleiche Fig. 5b) als in der anderen Schwenkposition bei Ausrichtung auf die weniger tiefe Rastnut 18 (vergleiche Fig. 5c).

Steht der Wählhebel 15 in der linken, also auf die tiefe Rastnut 17 ausgerichteten Position der Fig. 5b, so kann der Gerätebenutzer den EIN/AUS-Handschalter 11 voll durchdrücken und die dem zweiten Betriebszustand entsprechenden voreingestellten Betriebsparameter der Werkzeugmaschine M kommen sofort zur vollen Wirkung. Dies kann für manche Anwendungsfälle von Bedeutung sein, insbesondere auch bei möglicher Wahl eines Meißelbetriebs. In der anderen in Fig. 5c veranschaulichten Schwenkposition des Wählhebels 15 dagegen kann der EIN/AUS-Handschalter 11 nicht voll eingedrückt werden. In diesem Fall ist die erfindungsgemäße automatische Einstellung des Betriebsverhaltens der Maschine M gewählt, bei der also zunächst der erste Betriebszustand I mit verminderter Leistungsaufnahme automatisch eingestellt wird und anschließend zeitabhängig eine Umschaltung auf den zweiten Betriebszustand II mit erhöhter Leistungsaufnahme erfolgt.

## Patentansprüche

1. Verfahren zur automatischen Voreinstellung einer handgeführten Werkzeugmaschine (M), insbesondere eines Bohrhammers, die in verschiedenen Betriebszuständen betreibbar ist, **dadurch gekennzeichnet, daß** die Maschine (M) beim Einschalten zunächst in einen ersten Betriebszustand (I) mit verminderter Leistungsaufnahme und nach Ablauf einer vorbestimmten Zeitdauer in einen zweiten Betriebszustand (II) mit erhöhter Leistungsaufnahme geschaltet wird.

2. Verfahren nach Anspruch 1, **dadurch gekennzeichnet, daß** die Maschine (M) nach einer Zeitdauer von 2 bis 20 Sekunden vom ersten Betriebszustand (I) in den zweiten Betriebszustand (II) geschaltet wird.

3. Verfahren nach Anspruch 2, **dadurch gekennzeichnet, daß** die Zeitdauer ca. 5 Sekunden beträgt.

4. Verfahren nach einem der vorstehenden Ansprüche, **dadurch gekennzeichnet, daß** die Maschine (M) im ersten Betriebszustand (I) mit einer Spannung von 140 bis 200 V, insbesondere mit 170 V, versorgt wird.

5. Verfahren nach Anspruch 4, **dadurch gekennzeichnet, daß** die Maschine (M) im ersten Betriebszustand (I) mit einer im Vergleich zum zweiten Betriebszustand (II) verminderten Drehzahl und/oder verminderter Schlagfrequenz und/ oder verminderter Einzelschlagenergie betrieben wird.

6. Verfahren nach einem der Ansprüche 1 bis 3, **dadurch gekennzeichnet, daß** die Maschine (M) im zweiten Betriebszustand (II) mit einer Nennspannung von 210 bis 240 V, insbesondere mit einer Netzspannung von 230 V, versorgt wird.

7. Verfahren nach Anspruch 6, **dadurch gekennzeichnet, daß** die Maschine (M) im zweiten Betriebszustand (II) entsprechend der erhöhten Versorgungsspannung mit höherer Drehzahl und/oder höherer Schlagfrequenz und/oder wesentlich erhöhter Einzelschlagenergie betrieben wird.

8. Verfahren nach einem der vorstehenden Ansprüche, **dadurch gekennzeichnet, daß** die automatische Voreinstellung inhibierbar ist.

9. Handgeführte Werkzeugmaschine (M), insbesondere Bohrhammer, **gekennzeichnet durch** eine Einrichtung (1) zur automatischen Einstellung eines ersten Betriebszustands (I) mit verminderter Leistungsaufnahme beim Einschalten der Maschine und zur zeitabhängigen Umschaltung in einen zweiten Betriebszustand (II) mit erhöhter Leistungsaufnahme.

10. Werkzeugmaschine nach Anspruch 9, **gekennzeichnet durch** eine Einrichtung, die beim Einschalten der Maschine den zweiten Betriebszustand (II) für eine vorgegebene Zeitspanne von einigen Sekunden zwangsweise sperrt.

11. Werkzeugmaschine nach Anspruch 9 oder 10, **gekennzeichnet durch** eine von einem EIN/AUS-Handschalter (11) initialisierbare Zeitgeberschaltung, die einen Thyristor während des ersten Betriebszustands (I) auf eine reduzierte Ausgangsspannung setzt und nach Ablauf einer vorgegebenen Zeitdauer von einigen Sekunden die Durchschaltung der Nennspannung auf den Motor der Maschine bewirkt.

12. Werkzeugmaschine nach einem der vorstehenden Ansprüche 9 bis 11, **dadurch gekennzeichnet, daß** die automatische Einstelleinrichtung (1) in einen EIN/AUS-Schalter (11) der Maschine (M) eingebaut ist.

13. Werkzeugmaschine nach Anspruch 9, **gekennzeichnet durch** eine an der Maschine (M) vorhandene Wähleinrichtung (10) zur Vorwahl der automatischen Einstellung.

14. Werkzeugmaschine nach Anspruch 13, **dadurch gekennzeichnet, daß** die Wähleinrichtung eine einem EIN/AUS-Handschalter (11) der Maschine (M) zugeordnete mechanische Wähleinrichtung (13 - 18) ist.

15. Werkzeugmaschine nach Anspruch 14, **dadurch gekennzeichnet, daß** die Wähleinrichtung ein zwischen zwei im Gehäuse des EIN/AUS-Handschalters (11) durch unterschiedlich lange Nuten (17, 18) definierte Rastpositionen schwenkbarer Wählhebel (15) ist.
